# FASCICULE DE BREVET EUROPEEN

(11) **EP 2 577 920 B1**
(45) Date de publication et mention de la délivrance du brevet: **04.04.2018**
(21) Numéro de dépôt: 11727264.1
(22) Date de dépôt: 25.05.2011
(51) Int. Cl.: H04L 29/08

(54) **PROCÉDÉ DE ROUTAGE PSEUDO-DYNAMIQUE DANS UN CLUSTER COMPRENANT DES LIENS DE COMMUNICATION STATIQUES ET PROGRAMME D'ORDINATEUR METTANT EN OEUVRE CE PROCÉDÉ**
VERFAHREN DES PSEUDODYNAMISCHEN ROUTING IN EINEM CLUSTER MIT STATISCHEN KOMMUNIKATIONSLINKS UND COMPUTERPROGRAMM, DAS DIESES VERFAHREN IMPLEMENTIERT
METHOD OF PSEUDO-DYNAMIC ROUTING IN A CLUSTER COMPRISING STATIC COMMUNICATION LINKS AND COMPUTER PROGRAM IMPLEMENTING THIS METHOD

(30) Priorité: 01.06.2010 FR 1002294
(43) Date de publication de la demande: 10.04.2013
(73) Titulaire: Bull SAS, 78340 Les Clayes-sous-Bois (FR)
(72) Inventeur: DUGUE, Sébastien, F-38119 Saint Theoffrey (FR); FICET, Jean-Vincent, F-73110 La Chapelle Blanche (FR); KALEMKARIAN, Yann, F-38100 Grenoble (FR); MOREY-CHAISEMARTIN, Nicolas, F-38400 Saint-Martin d'Hères (FR)
(74) Mandataire: Santarelli
(86) Numéro de dépôt international: PCT/FR2011/051185
(87) Numéro de publication internationale: WO 2011/151569

(56) Documents cités:
- US-A1- 2003 028 670
- US-A1- 2008 256 079
- IZMAILOV R ET AL: "Administrative weight allocation for PNNI routing algorithms", HIGH PERFORMANCE SWITCHING AND ROUTING, 2001 IEEE WORKSHOP ON 29-31 MAY 2001, PISCATAWAY, NJ, USA,IEEE, 29 mai 2001 (2001-05-29), pages 347-352, XP010542826, ISBN: 978-0-7803-6711-1

## Description

La présente invention concerne le routage dans un cluster, c'est-à-dire la détermination de routes de communication entre un ensemble de noeuds du cluster, et plus particulièrement un procédé de routage pseudo-dynamique dans un cluster comprenant des liens de communication statiques et un programme d'ordinateur mettant en oeuvre ce procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou Infiniband (Ethernet et Infiniband sont des marques).

On connaît ainsi dans le document US2003/0028670 une méthode et un système d'allocation de ressources réseaux, plus particulièrement une méthode et un système d'allocation de ressources réseaux pour un trafic sous priorité basse, comme le trafic du meilleur effort. Cette méthode et ce système procurent un nouveau mécanisme pour assurer à la fois l'utilisation améliorée des ressources réseaux et la performance adéquate du trafic du meilleur effort en distribuant intelligemment les requêtes du trafic de meilleur effort à un niveau correspondant avec des niveaux de charge correspondants et sans réserver de bande passante. L'invention est définie par les revendications annexées.

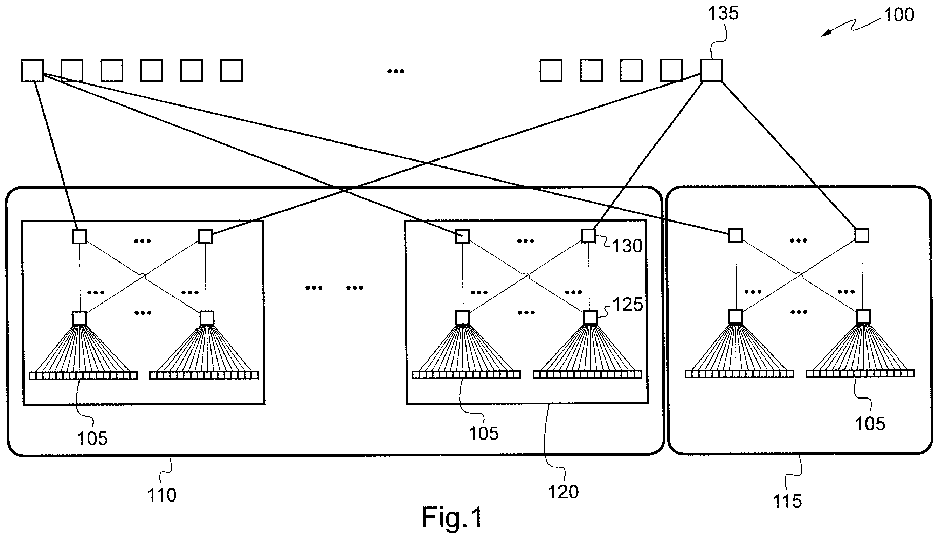

La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

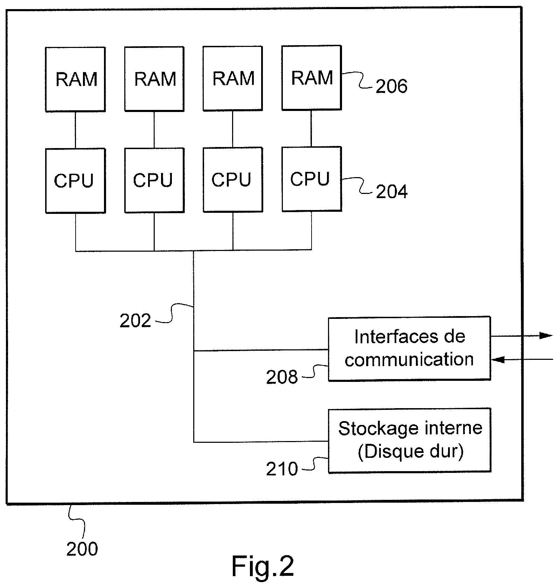

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :
- des unités centrales de traitement ou microprocesseurs 204 (ou CPU, sigle de *Central Processing Unit en* terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le noeud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Il est observé ici que les performances d'un cluster sont directement liées à la qualité des routes permettant le transfert de données entre les noeuds, établies via des liens de communication. De façon générale, des liens de communication physiques sont établis entre les noeuds et les commutateurs lors de la configuration matérielle d'un cluster, les routes de communication étant elles-mêmes déterminées dans une phase d'initialisation à partir d'une définition des connexions devant êtres établies entre les noeuds. Selon la technologie de communication mise en oeuvre, la configuration des routes peut être statique ou dynamique.

A titre d'illustration, la technologie Infiniband permet, dans un cluster, une configuration statique des routes. Cette configuration utilise des tables statiques de routage (ou LFT, sigle de *Linear Forwarding Table* en terminologie anglo-saxonne) dans chaque commutateur. Lorsque cette technologie est mise en oeuvre, un algorithme de routage tel que les algorithmes connus sous les noms de FTree, MINHOP, UPDN et LASH peut être utilisé.

De façon simplifiée, l'algorithme FTree détermine des routes de telle sorte que celles-ci soient réparties autant que possible à travers les liens de communication existants. A ces fins, lors du routage d'un réseau de communication entièrement connecté selon une architecture de type *fat-tree,* chaque noeud du réseau est considéré comme ayant une même importance. Ainsi, lorsqu'une route est établie entre deux noeuds d'un même lien, le nombre de routes utilisant ce lien, appelé la charge du lien, est augmenté de un. Lorsque l'algorithme de routage cherche à établir une nouvelle route et que plusieurs possibilités se présentent, il compare les niveaux de charge associés aux liens sur lesquels sont basées ces possibilités et choisit celle dont les liens ont le niveau de charge le plus faible.

La qualité de routage peut être exprimée en termes de nombre de routes par lien.

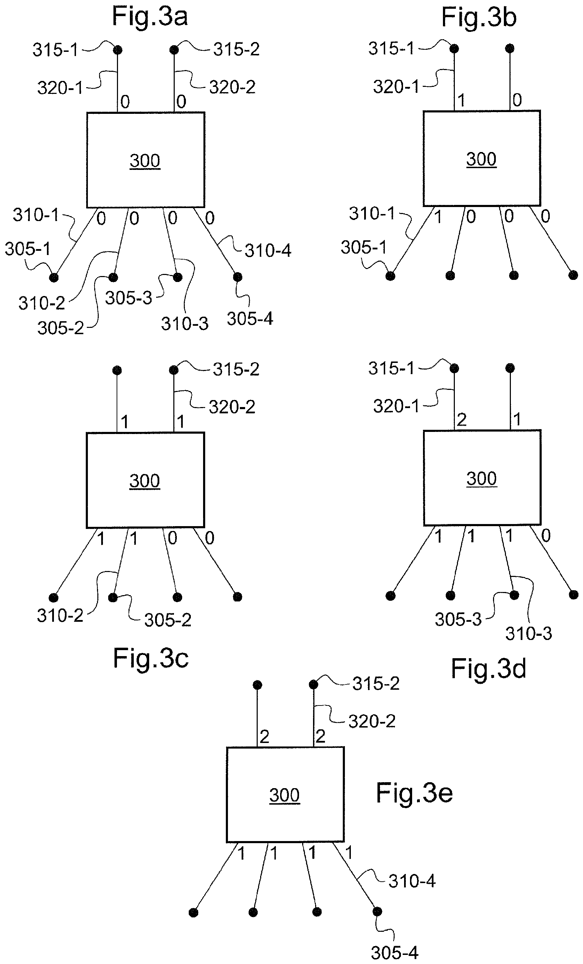

La figure 3, comprenant les figures 3a à 3e, illustre ce principe de routage dans un commutateur 300 lors d'une phase d'initialisation d'un cluster comprenant ce commutateur.

Le commutateur 300 a ici quatre liens de communication d'entrée, notés 310-1 à 310-4, reliant le commutateur 300 à des entrées 305-1 à 305-4 et deux liens de communication de sortie, notés 320-1 et 320-2, reliant le commutateur 300 à des sorties 315-1 et 315-2. Avant l'initialisation, aucun des liens 310-1 à 310-4, 320-1 et 320-2 ne comprend de route. Les niveaux de charge associés à ces liens sont donc nuls comme illustré sur la figure 3a à côté de chaque lien. Puis, lorsqu'une route doit être établie entre l'entrée 305-1 et une sortie du commutateur 300, le lien 310-1 (le seul pouvant être utilisé) est sélectionné ainsi que le lien 320-1 (les niveaux de charge associés aux liens 320-1 et 320-2 étant égaux, ici à zéro, le premier lien est sélectionné). Les niveaux de charge associés aux liens 310-1 et 320-1 sont alors incrémentés de un pour indiquer que ces liens mettent en oeuvre une route supplémentaire, comme illustré sur la figure 3b.

De même, lorsqu'une route doit être établie entre l'entrée 305-2 et une sortie du commutateur 300, le lien 310-2 (le seul pouvant être utilisé) est sélectionné ainsi que le lien 320-2 (le niveau de charge associé au lien 320-1 étant égal à un et le niveau de charge associé au lien 320-2 étant égal à zéro, ce dernier lien est sélectionné). Les niveaux de charge associés aux liens 310-2 et 320-2 sont alors incrémentés de un pour indiquer que ces liens mettent en oeuvre une route supplémentaire, comme illustré sur la figure 3c. De façon similaire, lorsqu'une route doit être établie entre l'entrée 305-3 et une sortie du commutateur 300, le lien 310-3 (le seul pouvant être utilisé) est sélectionné ainsi que le lien 320-1 (les niveaux de charge associés aux liens 320-1 et 320-2 étant égaux, le premier lien est sélectionné). Les niveaux de charge associés aux liens 310-3 et 320-1 sont alors incrémentés de un pour indiquer que ces liens mettent en oeuvre une route supplémentaire, comme illustré sur la figure 3d.

Enfin, lorsqu'une route doit être établie entre l'entrée 305-4 et une sortie du commutateur 300, le lien 310-4 (le seul pouvant être utilisé) est sélectionné ainsi que le lien 320-2 (le niveau de charge associé au lien 320-1 étant égal à deux et le niveau de charge associé au lien 320-2 étant égal à un, ce dernier lien est sélectionné). Les niveaux de charge associés aux liens 310-4 et 320-2 sont alors incrémentés de un pour indiquer que ces liens mettent en oeuvre une route supplémentaire, comme illustré sur la figure 3e. Lorsque toutes les routes entre les noeuds ont été établies, les tables statiques de routage des commutateurs sont mises à jour.

Cependant, alors que ces algorithmes de routage donnent de bons résultats, ces derniers ne sont pas optimaux.

L'invention permet de résoudre au moins un des problèmes exposés précédemment.

L'invention a ainsi pour objet un procédé pour ordinateur de routage pseudo-dynamique dans un cluster comprenant une pluralité de noeuds, des liens de communication statiques reliant des noeuds de ladite pluralité de noeuds, ledit routage étant basé sur des niveaux de charge associés auxdits liens de communication, ce procédé comprenant les étapes suivantes,
- réception d'une liste d'identifiants de noeuds de ladite pluralité de noeuds, lesdits identifiants désignant un ensemble de noeuds alloués à l'exécution d'une tâche ;
- assignation d'un poids ayant une première valeur prédéterminée à un couple formé d'un identifiant d'un premier noeud dudit ensemble de noeuds et d'un identifiant d'un second noeud dudit ensemble de noeuds, lesdits premier et second noeuds étant distincts, un poids ayant une seconde valeur prédéterminée, distincte de ladite première valeur, étant assignée par défaut aux couples formés d'identifiants de noeuds alloués à des tâches différentes ; et,
- routage dudit cluster, ledit routage comprenant la sélection d'une route entre lesdits premier et second noeuds et l'incrémentation d'un niveau de charge associé à chaque lien de communication comprenant ladite route sélectionnée de ladite première valeur.

Le procédé selon l'invention permet ainsi d'optimiser le routage d'un cluster en associant des poids à des routes afin de favoriser ou défavoriser certaines routes par rapport à d'autres selon des tâches devant être exécutées par des noeuds du cluster.

Le procédé comprend en outre une étape de comparaison d'une information caractéristique de ladite tâche avec une donnée prédéterminée, ladite étape de routage étant exécutée en réponse à ladite étape de comparaison.

Le procédé selon l'invention permet ainsi d'optimiser le routage d'un cluster selon des caractéristiques de tâches exécutées. Ladite information caractéristique de ladite tâche est, par exemple, le nombre de noeuds alloués à l'exécution de ladite tâche.

De façon avantageuse, le procédé comprend en outre une étape d'établissement d'une correspondance entre ledit identifiant dudit premier noeud et une adresse de sortie dudit premier noeud et entre ledit identifiant dudit second noeud et une adresse d'entrée dudit second noeud, ladite étape d'assignation d'un poids visant l'assignation d'un poids à un couple formé de ladite adresse de sortie dudit premier noeud et de ladite adresse d'entrée dudit second noeud.

Le procédé selon l'invention peut ainsi être mis en oeuvre facilement à partir de fichiers de configuration de clusters associant des adresses d'entrées et de sorties de noeuds à des identifiants de noeuds et associant des tâches à des noeuds.

Toujours selon un mode de réalisation particulier, le procédé comprend en outre les étapes suivantes,
- identification d'au moins deux noeuds dudit cluster, une connexion devant être établie entre lesdits au moins deux noeuds identifiés ;
- détermination d'au moins une route connectant lesdits au moins deux noeuds identifiés selon lesdits liens de communication, ladite au moins une route étant déterminée selon lesdits au moins deux noeuds identifiés, une pluralité de liens de communication desdits liens de communication et au moins un niveau de charge associé à chaque lien de communication de ladite pluralité de liens de communication, et sélection d'une route déterminée ;
- estimation d'une valeur de poids associé à ladite route sélectionnée ; et,
- incrémentation d'un niveau de charge associé à chaque lien de communication comprenant ladite route sélectionnée selon ledit poids estimé.

Le procédé selon l'invention permet ainsi d'optimiser le routage d'un cluster en fonction de l'allocation de noeuds à des tâches et selon des caractéristiques du cluster et des noeuds mis en oeuvre.

Le procédé comprend en outre, de préférence, une étape d'obtention d'un type de noeud pour au moins un desdits au moins deux noeuds identifiés, ladite valeur estimée dudit poids étant au moins partiellement estimée selon ledit type de noeud obtenu. Le procédé selon l'invention permet ainsi d'optimiser le routage d'un cluster selon des types de noeuds.

De façon avantageuse, le procédé comprend en outre une étape d'obtention d'une référence d'un groupe auquel appartient au moins un desdits au moins deux noeuds identifiés, ladite valeur estimée dudit poids étant au moins partiellement estimée selon ladite référence de groupe obtenue. Le procédé selon l'invention permet ainsi d'optimiser le routage d'un cluster selon des types de noeuds sans qu'il soit nécessaire de caractériser individuellement chaque noeud. Un type et/ou un groupe de noeuds est, de préférence, déterminé en fonction de la nature des noeuds correspondants.

Toujours selon un mode de réalisation particulier, le procédé comprend en outre une étape de mise à jour d'au moins une table de routage statique, ladite au moins une table de routage statique étant associée à au moins un commutateur dudit cluster, ledit au moins un commutateur reliant au moins deux noeuds dudit cluster. Le procédé selon l'invention peut ainsi être mis en oeuvre facilement, notamment dans des architectures classiques utilisant des commutateurs pourvus de tables de routage statiques.

Des routes sont avantageusement sélectionnées de façon ordonnée selon la valeur du poids qui leur est associé afin de simplifier le routage, les routes associées à de faibles poids étant plus faciles à définir que les routes associées à des poids plus importants.

L'invention a également pour objet un programme d'ordinateur comprenant des instructions adaptées à la mise en oeuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un noeud d'un cluster ;
- la figure 3, comprenant les figures 3a à 3e, illustre le principe de routage, selon un algorithme de type FTree, dans un commutateur lors d'une phase d'initialisation d'un cluster comprenant ce commutateur ;
- la figure 4, comprenant les figures 4a à 4d, illustre un exemple du principe de routage avec des poids, dans un commutateur, lors d'une phase d'initialisation d'un cluster comprenant ce commutateur ;
- la figure 5 illustre un exemple de topologie d'une partie d'un cluster dans laquelle le calcul de poids de routes connectant des noeuds en fonction de tâches exécutées, conformément à l'invention, permet d'optimiser le routage ; et,
- la figure 6, comprenant les figures 6a et 6b, illustre certaines étapes d'un exemple d'algorithme pour router ou re-router un cluster comprenant des liens de communication statiques.

Il a été observé que si les routes d'un réseau de communication dans un cluster sont de même nature, la nature des noeuds reliés par ces routes joue un rôle vis-à-vis du volume de données échangé et donc de la bande passante utilisée. Ainsi, par exemple, une route connectant deux noeuds de calcul utilise généralement moins de bande passante qu'une route connectant un noeud de calcul à un noeud de stockage.

De même, les routes utilisées pour connecter des noeuds de calcul utilisés pour effectuer une même tâche ont généralement besoin d'une bande passante plus élevée que celles utilisées pour connecter des noeuds de calcul utilisés pour effectuer des tâches différentes.

Il est rappelé ici qu'une tâche ou un processus, aussi appelée *job* en terminologie anglo-saxonne, est une application définie, en particulier, dans un temps et un lieu. Elle est généralement exécutée par un ensemble de noeuds après avoir été lancée par un gestionnaire de tâche, aussi appelé *batch manager* ou *resource manager* en terminologie anglo-saxonne. Le gestionnaire de tâche a notamment pour objet de déterminer le nombre de noeuds nécessaires à l'exécution d'une tâche, de vérifier qu'il existe un nombre de noeuds disponibles suffisant pour exécuter la tâche, en tenant compte, le cas échéant, de contraintes particulières, notamment de contraintes déterminées par un utilisateur, d'allouer des noeuds à l'exécution de la tâche et de lancer son exécution.

L'invention vise donc l'utilisation de la nature et du rôle des noeuds d'un cluster pour affecter un poids, ou un coefficient de pondération, aux routes connectant ces noeuds lors du routage. L'assignation d'un poids à des routes connectant certains types de noeuds d'un cluster et à des noeuds ayant des rôles particuliers, notamment à des noeuds exécutant une même tâche, permet de biaiser l'algorithme de routage utilisé vis-à-vis de certaines routes et, par conséquent, d'optimiser l'allocation de bande passante à chaque route dans les liens de communication mis en oeuvre.

De façon classique, lorsque l'algorithme de routage utilisé établit une route entre deux noeuds et que plusieurs possibilités se présentent, il compare les niveaux de charge associés à ces possibilités, c'est-à-dire, typiquement, le nombre de routes utilisant les liens correspondant à ces possibilités, et choisit celle dont le niveau de charge est le plus faible. Cependant, conformément à l'invention, lorsqu'une route est établie entre deux noeuds, le niveau de charge des liens de communication supportant cette route est incrémenté selon un poids dont la valeur est liée aux types de ces deux noeuds et à la tâche a laquelle ils sont alloués.

L'assignation d'un poids donné à certains types de routes permet de biaiser le routage en faveur de certaines routes qui ont des besoins spécifiques en termes de bande passante. Ainsi, en utilisant un poids dont la valeur est élevée pour une route connectant deux noeuds, il est possible d'allouer une bande passante plus élevée à la communication de données entre ces noeuds.

L'assignation de poids à des routes durant une phase de routage peut être réalisée à travers un API (sigle d'*Application Program Interface* en terminologie anglo-saxonne).

Selon un mode de réalisation particulier, l'assignation de poids lors de la phase de routage est déterminée en fonction du type des noeuds ou du ou des groupes auxquels ils appartiennent et en fonction des tâches exécutées par ces noeuds, de façon distincte.

Pour assigner un poids en fonction du type des noeuds ou du ou des groupes auxquels ils appartiennent, un fichier de poids, appelé *weight_file,* peut être utilisé. Il permet ici d'assigner des poids à des routes définies par des identifiants de port, appelés *port GUIDs* (sigle de *Globally Unique IDentifiers* en terminologie anglo-saxonne) dans un réseau de communication de type Infiniband.

Un tel fichier est analysé avant la phase de routage. Il contient une liste des éléments communicants du réseau de communication, typiquement des noeuds, regroupés par type, et une liste de poids pour des couples formés entre ces groupes. Lors de leur analyse, ces poids peuvent être utilisés pour remplir une matrice qui décrit l'incrément de niveau de charge devant être utilisé pour chaque lien de communication lors de la phase de routage. Par défaut, lorsque la valeur d'un poids pour une route connectant deux types de noeuds n'est pas définie, sa valeur est égale à un.

Lorsqu'une route est établie à travers un ensemble de liens durant la phase de routage, le niveau de charge associé à chacun de ces liens est incrémenté de la valeur du poids lié aux types de noeuds entre lesquels la route est établie.

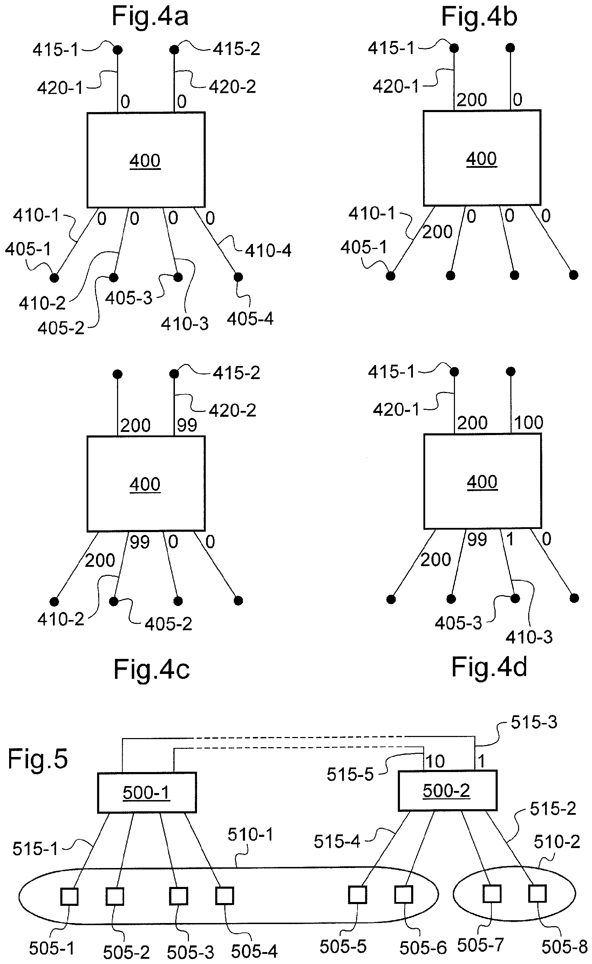

La figure 4, comprenant les figures 4a à 4d, illustre ce principe de routage en fonction du type des noeuds ou du ou des groupes auxquels ils appartiennent, dans un commutateur 400, lors d'une phase d'initialisation d'un cluster comprenant ce commutateur.

Comme le commutateur 300 illustré sur la figure 3, le commutateur 400 a ici quatre liens de communication d'entrée, notés 410-1 à 410-4, reliant le commutateur 400 à des entrées 405-1 à 405-4 et deux liens de communication de sortie, notés 420-1 et 420-2, reliant le commutateur 400 à des sorties 415-1 et 415-2. Les entrées sont, par exemple, des sorties de noeuds du réseau ou des sorties d'autres commutateurs.

Avant l'initialisation, aucun des liens 410-1 à 410-4, 420-1 et 420-2 ne comprend de route. Le niveau de charge associé à chacun de ces liens est donc nul comme illustré sur la figure 4a à côté de chaque lien. Puis, lorsqu'une route doit être établie entre l'entrée 405-1 et une sortie du commutateur 400, le lien 410-1 (le seul pouvant être utilisé) est sélectionné ainsi que le lien 420-1 (le même niveau de charge nul étant associé aux liens 420-1 et 420-2, le premier lien est sélectionné). Il est supposé ici que la route utilisant les liens 410-1 et 420-1 qui vient d'être établie a pour objet de connecter un noeud de calcul à un noeud de stockage. Par conséquent, si la valeur du poids d'une route connectant des noeuds de type calcul et stockage est 200, cette valeur est utilisée pour incrémenter le niveau de charge des liens 410-1 et 420-1, comme illustré sur la figure 4b.

De même, lorsqu'une route doit être établie entre l'entrée 405-2 et une sortie du commutateur 400, le lien 40-2 (le seul pouvant être utilisé) est sélectionné ainsi que le lien 420-2 (un niveau de charge égal à 200 étant associée au lien 420-1 et un niveau de charge nul étant associée au lien 420, ce dernier, dont le niveau de charge a la valeur la plus faible, est sélectionné).

A nouveau, s'il est admis que la route utilisant les liens 410-2 et 420-2 qui vient d'être établie a pour objet de connecter un noeud de service à un noeud de calcul et que la valeur du poids d'une route connectant des noeuds de type service et calcul est 99, cette valeur est utilisée pour incrémenter le niveau de charge des liens 410-2 et 420-2, comme illustré sur la figure 4c.

De façon similaire, lorsqu'une route doit être établie entre l'entrée 405-3 et une sortie du commutateur 400, le lien 410-3 (le seul pouvant être utilisé) est sélectionné ainsi que le lien 420-2 (un niveau de charge égal à 200 étant associé au lien 420-1 et un niveau de charge égal à 99 étant associé au lien 420, ce dernier, dont le niveau de charge a la valeur la plus faible, est sélectionné). S'il est admis que la route utilisant les liens 410-3 et 420-2 qui vient d'être établie a pour objet de lier deux noeuds de calcul et que la valeur du poids d'une route connectant des noeuds de type calcul est 1, cette valeur est utilisée pour incrémenter le niveau de charge des liens 410-3 et 420-2, comme illustré sur la figure 4d.

Un extrait de fichier de poids est présenté en annexe (extrait 1). Il illustre un exemple de groupage de noeuds d'un réseau de communication, chaque groupe représentant ici des types distincts de noeuds, ainsi que l'affectation de poids à des couples de type de noeuds.

Selon cet exemple, les noeuds ayant pour *port GUIDs* les valeurs 0x100901, 0x101201, 0x100903, 0x1101203, 0x101207, 0x100909 et 0x101209 sont des noeuds de type « *storage* », c'est-à-dire des noeuds de stockage. La définition d'un type de noeuds est ici réalisée à l'aide de l'indication DEF suivie du nom du groupe lui-même suivi de la liste des *port GUIDs* correspondants, placée entre accolades. De même, les noeuds ayant pour *port GUIDs* les valeurs 0x100905, 0x101205 et 0x100907 sont des noeuds de type « *admin* », c'est-à-dire des noeuds d'administration. De façon similaire, les noeuds ayant pour *port GUIDs* les valeurs 0x10090b, 0x010120b, 0x10090d, 0x10120d, 0x10090f, 0x10120f, 0x100911, 0x101211, 0x100913, 0x101213, 0x100915, 0x100917, 0x101217 et 0x100919 sont des noeuds de type *« compute* », c'est-à-dire des noeuds de calcul. Par ailleurs, un type de noeuds appelé « *service* » regroupe tous les noeuds de types « *storage* » et « *admin ».*

Les poids sont ici donnés en fin de fichier. La syntaxe pour définir le poids d'une route connectant deux noeuds utilise ici la formulation « ID1 => ID2 poids » où *ID1* est le *port GUID* ou le groupe du noeud d'origine, *ID2* est le *port GUID* ou le groupe du noeud de destination et *poids* est la valeur devant être utilisée lors du calcul de la charge d'un lien. Selon cet exemple, une valeur de poids égale à 200 est ajoutée à toutes les routes allant d'un noeud de calcul, noeud de type « *compute* », vers un noeud de stockage, noeud de type *« storage » (« compute => storage 200* »)*.* De façon similaire, une valeur de poids égale à 99 est ajoutée à toutes les routes allant d'un noeud de service, noeud de type « *service* », vers un noeud de calcul, noeud de type « *compute »* (« *service* => *compute* 99 »). De même, une valeur de poids égale à 200 est ajoutée à toutes les routes allant d'un noeud d'administration (noeud de type *« admin* ») vers un noeud de stockage, noeud de type « *storage* » (« *admin* =*> storage 200 »).*

Selon un mode de réalisation particulier, si le poids associé à une route reliant deux types de noeuds apparaît plusieurs fois dans le fichier de configuration des poids, le poids associé à cette route est égal au cumul des poids spécifiés.

Naturellement, d'autres poids peuvent être définis. De même, une syntaxe différente peut être utilisée. Par ailleurs, si, selon les exemples donnés précédemment, les routes sont considérées comme étant directionnelles, le niveau de charge associé à une route peut être le même que celui associé à la route inverse comme si les routes étaient bidirectionnelles.

Un tel routage peut être effectué lors de l'initialisation du cluster ou être effectué conjointement à un re-routage lié à l'exécution d'une tâche comme décrit ci-après.

Avant de lancer l'exécution d'une tâche, une liste des identifiants des noeuds alloués à l'exécution de cette tâche est transmise à un module logiciel de gestion de poids intra-tâche durant une étape appelée prologue de la tâche (ou *job prologue* en terminologie anglo-saxonne). Cette liste est établie par le gestionnaire de tâche avant de lancer la tâche.

Le module de gestion de poids intra-tâche associe alors un identifiant de tâche aux identifiants de noeuds appartenant à la liste reçue et établit, de préférence, une correspondance entre ces identifiants de noeuds et des informations mémorisées dans une base de données, notamment des identifiants de port, ou *port GUIDs,* afin d'établir une correspondance entre un identifiant de tâche et des *port GUIDs.* Un poids ayant une valeur particulière est alors assigné à chaque couple de *port GUIDs* associés à un même identifiant. Ainsi, lors du routage, lorsqu'une route est créée via un ensemble de liens de communication, le niveau de charge de ces liens est incrémenté d'une valeur égale à ces poids.

A titre d'illustration, si le niveau de charge d'un lien de communication utilisé pour établir une route entre deux noeuds n'étant pas alloués à l'exécution d'une même tâche est égale à un, le niveau de charge d'un lien de communication similaire utilisé pour établir une route entre deux noeuds alloués à l'exécution d'une même tâche peut être égale à dix. Ainsi, selon cet exemple, lorsqu'une route connectant des *port GUIDs* associés à un même identifiant de tâche est créée via un ensemble de liens de communication, le niveau de charge de chacun de ces liens de communication est incrémenté de dix.

Après avoir assigné des poids à des couples de noeuds, ou plus précisément, ici, à des couples de *port GUIDs,* un message peut être transmis à un gestionnaire réseau, appelé *subnet manager* en terminologie anglo-saxonne, pour re-router le cluster en fonction de la tâche à exécuter.

Cependant, de façon avantageuse, le re-routage n'est effectué que sous certaines conditions pour ne pas perturber inutilement le cluster. Ainsi, par exemple, le re-routage peut n'être effectué que si le nombre de noeuds alloués à la tâche à exécuter est important comparativement au nombre de noeuds du cluster et/ou si le temps estimé d'exécution de la tâche est supérieur à un seuil prédéterminé. Ainsi, à titre d'illustration, le re-routage peut n'être effectué que si plus de 25% des noeuds de cluster sont alloués à la tâche à exécuter et si le temps d'exécution de celle-ci est supérieur à une heure.

Après le re-routage, la tâche est lancée. Puis, après son exécution, les valeurs des poids des couples de noeuds (ou de *port GUIDs*) alloués à l'exécution de cette tâche sont réinitialisés à leur valeur initiale, par exemple à la valeur une. Cette étape est appelée épilogue.

La figure 5 illustre un exemple de topologie d'une partie d'un cluster dans laquelle le calcul de poids de routes connectant des noeuds en fonction de tâches exécutées, conformément à l'invention, permet d'optimiser le routage.

La partie du cluster représentée ici comprend un premier commutateur 500-1 auquel sont connectés quatre noeuds de calcul référencés 505-1 à 505-4 ainsi qu'un second commutateur 500-2, relié au premier commutateur 500-1 par deux liens de communication, auquel sont reliés les noeuds de calcul 505-5 à 505-8. Les liens de communication sont des liens de communication statiques, par exemple des liens de communication de type Infiniband.

Selon l'exemple représenté sur la figure 5, les noeuds de calcul 505-1 à 505-6, formant l'ensemble 510-1, sont assignés à une première tâche tandis que les noeuds de calcul 505-7 et 505-8, formant l'ensemble 510-2, sont assignés à une seconde tâche.

Comme indiqué précédemment, une valeur de poids d'une route connectant deux noeuds est fixée par défaut, elle peut être égale à un. Ainsi, la charge des liens de communication 515-1, 515-2 et 515-3, reliant le noeud 505-1 au commutateur 500-1, le noeud 505-8 au commutateur 500-2 et les commutateurs entre eux, respectivement, relative à la route connectant les noeuds 505-1 et 505-8 (en admettant que cette route utilise le lien de communication 515-3), est égale à cette valeur par défaut, par exemple à un comme précisé à côté du lien 515-3 (la charge relative aux autres routes utilisant le lien 515-3 est ignorée ici dans un souci de clarté).

Une telle valeur par défaut peut être changée lors du lancement d'une tâche.

Ainsi, suite à l'allocation des noeuds 505-1 à 505-6 à la première tâche, le poids des routes connectant entre eux les noeuds 505-1 à 505-6 peut être modifié. Par exemple, la charge des liens de communication 515-1, 515-4 et 515-5, reliant le noeud 505-1 au commutateur 500-1, le noeud 505-5 au commutateur 500-2 et les commutateurs entre eux, respectivement, relative à la route connectant les noeuds 505-1 et 505-5 (en admettant que cette route utilise le lien de communication 515-5), est égale à cette autre valeur, par exemple à dix comme précisé à côté du lien 515-5 (la charge relative aux autres routes utilisant le lien 515-5 est ignorée ici dans un souci de clarté).

Selon un mode de réalisation particulier, le calcul de poids de routes connectant des noeuds assignés à une même tâche fait appel à plusieurs modules logiciels. Ces modules visent notamment un gestionnaire de réseau permettant le re-routage et l'utilisation d'un API permettant de gérer des poids, un gestionnaire de tâche pour établir une liste de noeuds alloués à l'exécution d'une tâche, un gestionnaire de liens de communication pour établir la relation entre l'identifiant d'un noeud et des informations de routage telles que des *port GUIDs* et un module de gestion de poids intra-tâche. Certains de ces modules peuvent être utilisés sans modification particulière (gestionnaire de tâches), d'autres sont modifiés pour prendre en compte la gestion de poids (gestionnaire de réseau et gestionnaire de liens de communication) et d'autres sont spécifiques à la gestion de poids (module de gestion de poids intra-tâche).

L'activation de la gestion de poids peut être réalisée à travers le gestionnaire de réseau en insérant une ligne de commande dans un fichier de configuration, par exemple la ligne *routing_engine <routing engine name>.* Elle peut également être réalisée par la sélection d'une option d'une commande du gestionnaire de réseau, par exemple la commande *-R <routing engine name>.*

Il est observé ici que les poids associés à des routes connectant des noeuds autres que des noeuds de calcul ne sont pas affectés par l'affectation de poids en fonction des tâches exécutées par des noeuds du fait que ces noeuds ne figurent pas dans la liste des identifiants des noeuds alloués à une tâche transmise par le gestionnaire de tâche.

Ainsi, la gestion de poids en fonction du type des noeuds ou du ou des groupes auxquels ils appartiennent et la gestion de poids en fonction des tâches exécutées sont complémentaires et ne se perturbent pas mutuellement.

Lors de la phase de routage, les routes sont, de préférence, déterminées de façon ordonnée de telle sorte qu'une route associée à un poids dont la valeur est supérieure à celle d'un poids d'une autre route soit déterminée avant cette autre route afin d'optimiser le routage. Cet ordre peut être déterminé à partir de la matrice de poids et des groupes de noeuds permettant de les identifier en fonction de leur type et à partir d'une table de poids déterminée lors du lancement d'une tâche.

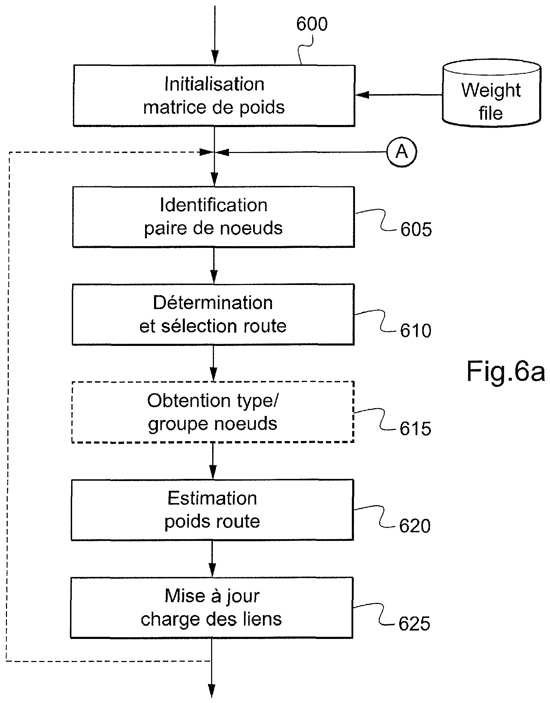

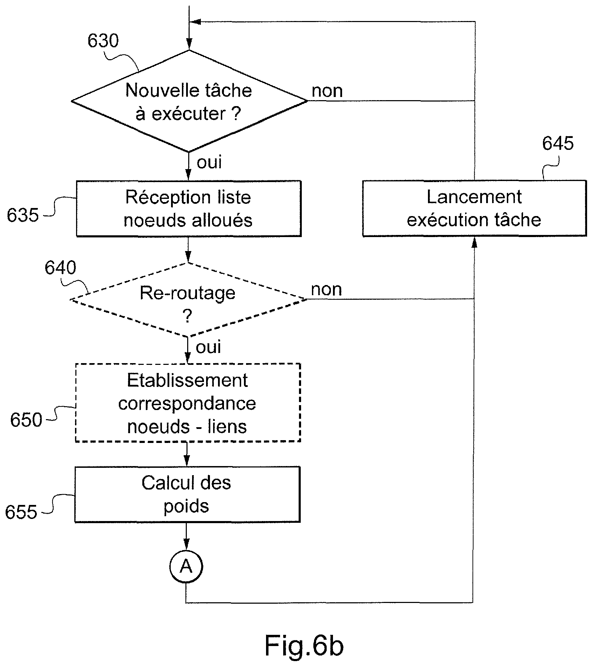

La figure 6, comprenant les figures 6a et 6b, illustre certaines étapes d'un exemple d'algorithme pour router ou re-router un cluster comprenant des liens de communication statiques.

La figure 6a illustre schématiquement un exemple d'algorithme mis en oeuvre pour déterminer et sélectionner une route connectant deux noeuds ainsi que pour déterminer le niveau de charge d'un lien de communication après la sélection d'une route.

Une première étape (étape 600) a ici pour objet l'initialisation d'une matrice de poids permettant d'associer un poids à un couple de noeuds formé de deux noeuds (même poids quelque soit le sens de la route) ou d'un noeud d'origine et d'un noeud de destination (poids lié au sens d'une route) comme illustré en annexe (table 1). Cette matrice peut notamment être établie à partir d'un fichier de poids tel que celui présenté en annexe (extrait 1). Cette étape permet également de mémoriser les correspondances entre un identifiant d'un noeud avec son type et/ou un ou plusieurs groupes auxquels il appartient. Alternativement, la matrice de poids peut établir directement les poids associés à chaque couple de noeuds comme illustré partiellement en annexe (table 2).

La table 1 indique le poids devant être affecté à une route connectant un type de noeud source à un type de noeud destination tandis que la table 2 indique le poids devant être affecté à une route connectant un noeud source à un noeud destination.

Dans une étape suivante (étape 605), une paire de noeuds entre lesquels une route doit être établie est identifiée. La paire de noeuds comprend ici un noeud source et un noeud destination. Cette étape est une étape de base des algorithmes de routage pour permettre de définir les routes devant être établies. Les noeuds sont, par exemple, identifiés selon des *port GUIDs.*

Les étapes de détermination des routes possibles pour connecter ces noeuds identifiés et de sélection de la meilleure route sont alors réalisées (étape 610) selon un algorithme standard, par exemple selon l'algorithme FTree.

Dans une étape suivante (étape 615), le type des noeuds identifiés ou le ou les groupes auxquels ils appartiennent sont obtenus selon les informations obtenues durant l'étape d'initialisation. Comme suggéré par l'utilisation de traits pointillés, cette étape est optionnelle car si, en particulier, la matrice de poids déterminée durant la phase d'initialisation associe directement des poids aux identifiants des noeuds, il n'est pas nécessaire, à ce stade, d'en déterminer le type et/ou de déterminer le ou les groupes auxquels ils appartiennent.

Le poids de la route connectant ces deux noeuds est alors estimé (étape 620). Cette estimation est basée sur les types des noeuds, le ou les groupes auxquels ils appartiennent et/ou leur identifiant, par exemple leur *port GUID,* ou sur des résultats de calcul précédemment effectués si les deux noeuds identifiés sont des noeuds de calcul alloués à l'exécution d'une même tâche.

Lorsque le poids est lié au type des noeuds identifiés ou à un ou plusieurs groupes auxquels ils appartiennent, il est, de préférence, directement donné par une lecture de la matrice de poids préalablement déterminée. Alternativement, un poids peut être estimé selon une référence mémorisée dans la matrice de poids selon une fonction ou une table prédéterminée. Les poids issus de la matrice de poids peuvent également être majorés ou minorés selon des circonstances particulières liées, par exemple, à la topologie du cluster et à la position des liens mis en oeuvre par la route considérée.

Lorsque le poids est lié à la tâche effectuée par les noeuds identifiés, il est obtenu via une table de poids telle que celle présentée en annexe (Table 3).

Comme indiqué précédemment, si la valeur du poids d'une route n'est pas égale à une valeur par défaut, elle est égale à une valeur déterminée en fonction d'un type de noeuds ou de groupes d'appartenance ou en fonction d'une allocation selon une tâche mais elle n'est, de préférence, pas égale à une valeur déterminée en fonction d'un type de noeuds ou de groupes d'appartenance et en fonction d'une allocation selon une tâche. Par conséquent, si cette valeur est déterminée à partir de la matrice de poids utilisée, il n'est pas toujours nécessaire de vérifier si le poids doit être modifié en fonction de l'allocation des noeuds identifiés.

La table 3 comprend ici trois colonnes correspondant respectivement à un *port GUID* source, un *port GUID* destination et une valeur de poids. Chaque ligne correspond à une route entre le noeud comprenant le *port GUID* source et le noeud comprenant le *port GUID* destination.

Le poids estimé pour la route sélectionnée est alors utilisé pour mettre à jour le niveau de charge associé aux liens de communication mis en oeuvre par la route considérée (étape 625). Comme décrit précédemment, la valeur du poids estimé peut être ajoutée au niveau de charge des liens de communication mis en oeuvre par la route considérée.

Comme suggéré par la flèche en trait pointillé, les étapes 605 à 625 peuvent être répétées pour établir de nouvelles routes. Typiquement, les étapes 605 à 625 sont répétées pour toutes les routes devant être établies dans le cluster dans lequel l'algorithme illustré sur la figure 6a est mis en oeuvre.

La figure 6b illustre certaines étapes d'un exemple d'algorithme de calcul de poids de routes connectant deux noeuds lorsque ces noeuds sont alloués à l'exécution d'une même tâche.

Comme indiqué précédemment, lorsqu'une nouvelle tâche doit être lancée, le gestionnaire de tâche détermine si celle-ci peut être exécutée et, dans l'affirmative, établit la liste des noeuds alloués à l'exécution de celle-ci. Ainsi, lorsqu'une nouvelle tâche doit être exécutée (étape 630), le module de gestion de poids intra-tâche reçoit la liste des noeuds alloués à son exécution (étape 635). Un identifiant de tâche est associé à ces identifiants de noeuds.

Si aucune nouvelle tâche ne doit être exécutée, l'algorithme boucle sur lui-même jusqu'à ce qu'il soit stoppé.

Un test est alors effectué (étape 640) pour déterminer s'il convient d'effectuer un re-routage du cluster pour optimiser, en particulier, l'exécution de la tâche devant être exécutée.

Comme indiqué précédemment, un tel test peut notamment consister à comparer le nombre de noeuds alloués à la tâche à exécuter avec le nombre de noeuds du cluster et/ou à comparer le temps estimé d'exécution de la tâche avec un seuil prédéterminé.

Comme suggéré par l'utilisation de trait pointillé, cette étape est optionnelle. Il peut être décidé qu'un re-routage doit être effectué pour chaque tâche exécutée.

S'il n'est pas nécessaire d'effectuer un re-routage, une instruction est transmise au gestionnaire de tâche pour permettre l'exécution de la tâche considérée (étape 645). L'algorithme retourne alors à l'étape 630 dans l'attente d'une nouvelle tâche à effectuer.

Au contraire, si un re-routage doit être effectué, une étape suivante (étape 650) vise à établir un lien entre des identifiants de noeuds et des informations de routage telles que des *port GUIDs.* Cette étape est typiquement réalisée à partir de la liste d'identifiants de noeuds reçue du gestionnaire de tâche et de données de configuration généralement mémorisées dans une base de données. Cette étape permet notamment d'identifier des adresses sources et destinations de noeuds alloués à l'exécution d'une même tâche et entre lesquels des routes doivent être établies.

A nouveau, comme suggéré par l'utilisation de trait pointillé, cette étape est optionnelle. Sa mise en oeuvre dépend de la façon dont sont gérés les liens de communication entre les noeuds dans le cluster.

Enfin, un poids est attribué à chaque route connectant une adresse de sortie d'un noeud alloué à la tâche devant être exécutée à une adresse d'entrée d'un noeud alloué à cette même tâche. De telles adresses sont, de préférence, des *port GUIDs.* Cette étape permet d'établir une table de poids telle que celle illustrée en annexe (Table 3).

Le cluster est alors re-routé selon un algorithme tel que celui décrit en référence à la figure 6a (référence A). Une instruction est ensuite transmise au gestionnaire de tâche pour permettre l'exécution de la tâche considérée (étape 645) et l'algorithme retourne à l'étape 630 dans l'attente d'une nouvelle tâche à effectuer.

Il est observé que l'algorithme décrit en référence à la figure 6 peut, par exemple, être mis en oeuvre dans un dispositif dont l'architecture est similaire à celle décrite en référence à la figure 2.

Cet algorithme est mis en oeuvre au niveau du gestionnaire de réseau s'exécutant sur un noeud d'administration.

Par ailleurs, il est observé que l'utilisation de poids dans un algorithme de routage est compatible avec un algorithme de gestion de qualité de service (appelé QoS, sigle de *Quality of Service* en terminologie anglo-saxonne). Il est rappelé ici que la gestion de qualité de service, typiquement basée sur des niveaux de service et des crédits associés à chaque route selon un concept de lien virtuel, permet de favoriser certaines routes en cas de contention du réseau. Cette gestion est donc indépendante du routage en lui-même. Ces deux approches sont donc complémentaires pour améliorer la transmission de données dans un cluster et ainsi améliorer les performances de ce dernier.

Naturellement, pour satisfaire des besoins spécifiques, une personne compétente dans le domaine de l'invention pourra appliquer des modifications dans la description précédente.

### ANNEXE

```
          DEF storage {
          0x100901
          0x101201
          0x100903
          0x1101203
          0x101207
          0x100909
          0x101209
          }
 
          DEF admin {
          0x100905
          0x101205
          0x100907
          }
 
          DEF service {
          storage
          admin
          }
 
          DEF compute {
          0x10090b
          0x10120b
          0x10090d
          0x10120d
          0x10090f
          0x10120f
          0x100911
          0x101211
          0x100913
          0x101213
          0x100915
          0x100917
          0x101217
          0x100919
          }
 
          compute => storage 200
          service => compute 99
          admin => storage 200
```

### Extrait 1

**Table 1**

| source/dest. | **storage** | **admin** | **service** | **compute** |
|---|---|---|---|---|
| **storage** | 1 | 1 | 1 | 99 |
| **admin** | 200 | 1 | 1 | 99 |
| **service** | 1 | 1 | 1 | 99 |
| **compute** | 200 | 1 | 1 | 1 |

**Table 2**

| source/dest. | **0x100901** | **0x101201** | **0x100903** | **...** | **0x100919** |
|---|---|---|---|---|---|
| **0x100901** | - | 200 | 200 | ... | 1 |
| **0x101201** | 200 | - | | ... | 1 |
| **0x100903** | 200 | 200 | - | ... | 1 |
| **...** | ... | ... | ... | - | ... |
| **Ox100919** | 200 | 200 | 200 | ... | - |

**Table 3**

| **Adresse source** | **Adresse destination** | **Poids** |
|---|---|---|
| 0x10090b | 0x100911 | 10 |
| 0x10120b | 0x10090d | 10 |
| 0x10090d | 0x10120b | 10 |
| ... | ... | ... |
| 0x100911 | 0x10120b | 10 |

## Revendications

1. Procédé pour ordinateur de routage pseudo-dynamique dans un cluster comprenant une pluralité de noeuds, des liens de communication statiques reliant des noeuds de ladite pluralité de noeuds, ledit routage étant basé sur des niveaux de charge associés auxdits liens de communication, ce procédé comprenant les étapes suivantes,
- réception (635) d'une liste d'identifiants de noeuds de ladite pluralité de noeuds, lesdits identifiants désignant un ensemble de noeuds alloués à l'exécution d'une même tâche ;
- assignation (655) d'un poids ayant une première valeur prédéterminée à un couple formé d'un identifiant d'un premier noeud dudit ensemble de noeuds et d'un identifiant d'un second noeud dudit ensemble de noeuds, lesdits premier et second noeuds étant distincts, un poids ayant une seconde valeur prédéterminée, distincte de ladite première valeur, étant assignée par défaut aux couples formés d'identifiants de noeuds alloués à des tâches différentes ; le procédé étant **caractérisé en ce qu'**il comprend en outre les étapes suivantes,
- comparaison d'une information caractéristique de l'une desdites tâches avec une donnée prédéterminée, ladite information caractéristique étant le nombre de noeuds alloués à l'exécution de ladite tâche ; et,
- routage dudit cluster, ledit routage comprenant la sélection (610) d'une route entre lesdits premier et second noeuds et l'incrémentation (625) d'un niveau de charge associé à chaque lien de communication comprenant ladite route sélectionnée de ladite première valeur, ladite étape de routage étant exécutée en réponse à ladite étape de comparaison.

2. Procédé selon la revendication précédente comprenant en outre une étape d'établissement d'une correspondance entre ledit identifiant dudit premier noeud et une adresse de sortie dudit premier noeud et entre ledit identifiant dudit second noeud et une adresse d'entrée dudit second noeud, ladite étape d'assignation d'un poids visant l'assignation d'un poids à un couple formé de ladite adresse de sortie dudit premier noeud et de ladite adresse d'entrée dudit second noeud.

3. Procédé selon l'une quelconque des revendications précédentes comprenant en outre les étapes suivantes,
- identification (605) d'au moins deux noeuds dudit cluster, une connexion devant être établie entre lesdits au moins deux noeuds identifiés ;
- détermination (610) d'au moins une route connectant lesdits au moins deux noeuds identifiés selon lesdits liens de communication, ladite au moins une route étant déterminée selon lesdits au moins deux noeuds identifiés, une pluralité de liens de communication desdits liens de communication et au moins un niveau de charge associé à chaque lien de communication de ladite pluralité de liens de communication, et sélection d'une route déterminée ;
- estimation (620) d'une valeur de poids associé à ladite route sélectionnée ; et,
- incrémentation (625) d'un niveau de charge associé à chaque lien de communication comprenant ladite route sélectionnée selon ledit poids estimé.

4. Procédé selon la revendication précédente comprenant en outre une étape d'obtention (615) d'un type de noeud pour au moins un desdits au moins deux noeuds identifiés, ladite valeur estimée dudit poids étant au moins partiellement estimée selon ledit type de noeud obtenu.

5. Procédé selon la revendication 3 ou la revendication 4 comprenant en outre une étape d'obtention (615) d'une référence d'un groupe auquel appartient au moins un desdits au moins deux noeuds identifiés, ladite valeur estimée dudit poids étant au moins partiellement estimée selon ladite référence de groupe obtenue.

6. Procédé selon l'une quelconque des revendications précédentes comprenant en outre une étape de mise à jour d'au moins une table de routage statique, ladite au moins une table de routage statique étant associée à au moins un commutateur dudit cluster, ledit au moins un commutateur reliant au moins deux noeuds dudit cluster.

7. Procédé selon l'une quelconque des revendications précédentes selon lequel des routes sont sélectionnées de façon ordonnée selon la valeur du poids qui leur est associé.

8. Programme d'ordinateur comprenant des instructions adaptées à la mise en oeuvre de chacune des étapes du procédé selon l'une quelconque des revendications précédentes lorsque ledit programme est exécuté sur un ordinateur.

## Patentansprüche

1. Verfahren für einen Computer zum pseudo-dynamischen Routing in einem Cluster, mehrere Knoten umfassend, wobei statische Kommunikationsverbindungen die Knoten der mehreren Knoten verbinden, wobei das Routing auf den mit den Kommunikationsverbindungen verbundenen Auslastungsgraden beruht, wobei dieses Verfahren die folgenden Schritte umfasst:
- Empfangen (635) einer Liste von Knotenkennungen der mehreren Knoten, wobei die Kennungen eine Einheit von Knoten bezeichnen, denen die Ausführung ein und derselben Aufgabe zugeteilt ist;
- Zuweisen (655) einer Gewichtung, die einen ersten vorbestimmten Wert hat, an ein Paar, das aus eine Kennung eines ersten Knotens der Einheit von Knoten und einer Kennung eines zweiten Knotens der Einheit von Knoten gebildet ist, wobei sich der erste und zweite Knoten unterscheiden, wobei eine Gewichtung, die einen zweiten vorbestimmten Wert hat, der sich vom ersten Wert unterscheidet, als Standardwert den Paaren zugeteilt wird, die aus Kennungen von Knoten gebildet sind, die unterschiedlichen Aufgaben zugeteilt sind; wobei das Verfahren **dadurch gekennzeichnet ist, dass** es darüber hinaus die folgenden Schritte umfasst:
- Vergleichen einer kennzeichnenden Information einer der Aufgaben mit einem vorbestimmten Grundelement, wobei die kennzeichnende Information die Anzahl der Knoten ist, denen die Ausführung der Aufgabe zugeteilt ist; und
- Routing des Clusters, wobei das Routing die Auswahl (610) einer Route zwischen dem ersten und zweiten Knoten und die Inkrementierung (625) eines mit jeder Kommunikationsverbindung, welche die ausgewählte Route des ersten Werts enthält, verbundenen Auslastungsgrads umfasst, wobei der Schritt des Routings im Ansprechen auf den Vergleichsschritt erfolgt.

2. Verfahren nach dem vorhergehenden Anspruch, darüber hinaus einen Schritt des Herstellens einer Korrespondenz zwischen der Kennung des ersten Knotens und einer Ausgangsadresse des ersten Knotens und zwischen der Kennung des zweiten Knotens und einer Eingangsadresse des zweiten Knotens umfassend, wobei der Schritt des Zuweisens einer Gewichtung darauf abzielt, einem Paar, das aus der Ausgangsadresse des ersten Knotens und der Eingangsadresse des zweiten Knotens gebildet ist, eine Gewichtung zuzuweisen.

3. Verfahren nach einem der vorhergehenden Ansprüche, darüber hinaus die folgenden Schritte umfassend:
- Identifizieren (605) von mindestens zwei Knoten des Clusters, wobei eine Verbindung zwischen den mindestens zwei identifizierten Knoten hergestellt werden soll;
- Bestimmen (610) mindestens einer Route, welche die mindestens zwei identifizierten Knoten entsprechend den Kommunikationsverbindungen verbindet, wobei die mindestens eine Route entsprechend den mindestens zwei identifizierten Knoten, mehreren Kommunikationsverbindungen der Kommunikationsverbindungen und mindestens eines mit jeder Kommunikationsverbindung der mehreren Kommunikationsverbindungen verbundenen Auslastungsgrads und der Auswahl einer vorbestimmten Route bestimmt wird;
- Schätzen (620) eines mit der ausgewählten Route verbundenen Gewichtungswerts; und
- Inkrementierung (625) eines mit jeder Kommunikationsverbindung, welche die ausgewählte Route umfasst, verbundenen Auslastungsgrads entsprechend der geschätzten Gewichtung.

4. Verfahren nach dem vorhergehenden Anspruch, darüber hinaus einen Schritt des Ermittelns (615) eines Typs Knoten für mindestens einen der mindestens zwei identifizierten Knoten umfassend, wobei der geschätzte Wert der Gewichtung zumindest teilweise entsprechend dem ermittelten Typ Koten geschätzt wird.

5. Verfahren nach Anspruch 3 oder Anspruch 4, darüber hinaus einen Schritt des Ermittelns (615) einer Referenz einer Gruppe umfassend, zu der mindestens einer der mindestens zwei identifizierten Knoten gehört, wobei der geschätzte Wert der Gewichtung zumindest teilweise entsprechend der ermittelten Gruppenreferenz geschätzt wird.

6. Verfahren nach einem der vorhergehenden Ansprüche, darüber hinaus einen Schritt der Aktualisierung mindestens einer Tabelle statischen Routings umfassend, wobei mindestens eine Tabelle statischen Routings mindestens einem Schalter des Clusters zugeordnet wird, wobei der mindestens eine Schalter mindestens zwei Knoten des Clusters verbindet.

7. Verfahren nach einem der vorhergehenden Ansprüche, gemäß dem die Routen auf geordnete Weise entsprechend dem Wert der Gewichtung ausgewählt werden, die ihnen zugeordnet ist.

8. Computerprogramm, Anweisungen enthaltend, die zur Umsetzung jedes der Schritte des Verfahrens nach einem der vorhergehenden Ansprüche angepasst sind, wenn das Programm auf einem Computer abgearbeitet wird.

## Claims

1. A computer method for pseudo-dynamic routing in a cluster comprising a plurality of nodes, static communication links linking nodes of said plurality of nodes, said routing being based on load levels associated with said communication links, the method comprising the following steps,
- receiving (635) a list of node identifiers of said plurality of nodes, said identifiers designating a set of nodes allocated to the execution of a same task;
- assigning (655) a weight having a first predetermined value to a pair formed by an identifier of a first node of said set of nodes and by an identifier of a second node of said set of nodes, said first and second nodes being distinct, a weight having a second predetermined value, distinct from said first value, being assigned by default to the pairs formed of identifiers of nodes allocated to different tasks; the method being **characterized in that** it further comprises the following steps,
- comparing an item of information characteristic of one of said tasks with a predetermined item of data, said characteristic item of information being the number of nodes allocated to the execution of said task; and
- routing said cluster, said routing comprising selecting (610) a route between said first and second nodes and incrementing (625) a load level associated with each communication link comprising said selected route by said first value, said routing step being executed in response to said comparing step.

2. A method according to the preceding claim further comprising a step of establishing a match between said identifier of said first node and an output address of said first node and between said identifier of said second node and an input address of said second node, said step of assigning a weight being directed to assigning a weight to a pair formed of said output address of said first node and said input address of said second node.

3. A method according to any one of the preceding claims further comprising the following steps,
- identifying (605) at least two nodes of said cluster, a connection having to be established between said at least two identified nodes;
- determining (610) at least one route connecting said at least two identified nodes according to said communication links, said at least one route being determined according to said at least two identified nodes, a plurality of communication links of said communication links and at least one load level associated with each communication link of said plurality of communication links, and selecting a determined route;
- estimating (620) a weight value associated with said selected route; and,
- incrementing (625) a load level associated with each communication link comprising said selected route according to said estimated weight.

4. A method according to the preceding claim further comprising a step (615) of obtaining a type of node for at least one of said at least two identified nodes, said estimated value of said weight being at least partially estimated according to said obtained type of node.

5. A method according to claim 3 or claim 4 further comprising a step (615) of obtaining a reference of a group to which belongs at least one of said at least two identified nodes, said estimated value of said weight being at least partially estimated according to said group reference obtained.

6. A method according to any one of the preceding claims further comprising a step of updating at least one static routing table, said at least one static routing table being associated with at least one switch of said cluster, said at least one switch linking at least two nodes of said cluster.

7. A method according to any one of the preceding claims wherein routes are selected in order of the value of the weight associated with them.

8. A computer program comprising instructions adapted for the implementation of each of the steps of the method according to any one of the preceding claims when said program is executed on a computer.
